# EUROPÄISCHE PATENTANMELDUNG

(11) **EP 3 862 822 A1**
(43) Veröffentlichungstag der Anmeldung: **11.08.2021**
(21) Anmeldenummer: 20155843.4
(22) Anmeldetag: 06.02.2020
(51) Int. Cl.: G05B 19/04, G05B 19/042, G06F 21/50, G06F 11/36

(54) **VERFAHREN UND SYSTEM ZUM VALIDIEREN EINES STEUERUNGSPROGRAMMS**

(71) Anmelder: Siemens Aktiengesellschaft, 80333 München (DE)
(72) Erfinder: Pohlan, Rudolf, 76337 Waldbronn (DE)

(57) **Zusammenfassung**

Die vorliegende Erfindung betrifft ein Verfahren (100) und ein System (1) zum Validieren eines Steuerungsprogramms (S), insbesondere für eine technische Anlage. Dabei werden Programmkomponenten (P) des Steuerungsprogramms (S) paarweise mit Programmkomponenten (P') aus einer Programmbibliothek (3) verglichen (S1). Erfindungsgemäß wird ein Ergebnis (E) des Vergleichs, insbesondere graphisch, ausgegeben (S2), wobei das Ergebnis (E) bezüglich verschiedener Klassen (Ka, Kb, Kc) von Programmkomponenten (P, P') strukturiert ist

## Beschreibung

Die vorliegende Erfindung betrifft ein Verfahren und ein System zum Validieren eines Steuerungsprogramms, insbesondere für eine technische Anlage.

Um die Prozesse in technischen Anlagen, zum Beispiel in Kraftwerken oder in verfahrenstechnischen Anlagen, z. B. der Pharmaindustrie, zu steuern und/oder regeln, sind Leitsysteme bekannt. Bestandteil der Leitsysteme sind üblicherweise softwaretechnische Steuerungsprogramme, welche Datenströme untergeordneter Ebenen, dem Feld oder einzelner Zellen, wie zum Beispiel Signale der Mess-, Steuer- und Regelungstechnik, verarbeiten können.

Zur Erzeugung eines solchen Steuerungsprogramms, mit dem Automatisierungsgeräte programmiert sein oder werden können, ist es bekannt, sich vorgefertigter softwaretechnischer Programmkomponenten zu bedienen, um eine effiziente Projektierung der Automatisierung der technischen Anlage zu erreichen. Diese vorgefertigten Programmkomponenten werden als Vorlagen (engl. "Templates") in Programmbibliotheken, zum Beispiel in Form von Datenbanken, verwaltet. Je nach Projektierung kann es in einigen Fällen notwendig sein, einzelne vorgefertigte Programmkomponenten zu modifizieren, zum Beispiel zu erweitern, oder sogar für den vorliegenden Fall speziell angepasste Programmkomponenten neu zu erschaffen, um gewünschte Prozessabläufe realisieren zu können.

Da solche Prozessabläufe in manchen Bereichen, z. B. in der Pharmaindustrie, vorgegebene Normen bzw. Standards erfüllen müssen, ist es für den Betreiber bzw. Anbieter der Anlage im Allgemeinen notwendig, die entsprechenden Steuerungsprogramme z. B. von einer Zulassungsstelle validieren zu lassen.

Es ist eine Aufgabe der Erfindung, die Validierung eines Steuerungsprogramms zu erleichtern, insbesondere effizienter zu machen.

Diese Aufgabe wird gelöst durch ein Verfahren und ein System zur Validierung eines Steuerungsprogramms, insbesondere für eine technische Anlage, gemäß den unabhängigen Ansprüchen.

Beim, insbesondere computerimplementierten, Verfahren zum Validieren eines Steuerungsprogramms, insbesondere für eine technische Anlage, gemäß einem ersten Aspekt der Erfindung werden Programmkomponenten des Steuerungsprogramms paarweise mit Programmkomponenten aus einer Programmbibliothek verglichen. Erfindungsgemäß wird ein Ergebnis des Vergleichs, insbesondere graphisch, ausgegeben, wobei das Ergebnis bezüglich verschiedener Klassen von Programmkomponenten strukturiert ist.

Die Erfindung kann insbesondere in Form eines Computerprogrammprodukts, etwa als Datenträger, vorliegen, auf dem ein oder mehrere Programme zur Ausführung des Verfahrens gemäß dem ersten Aspekt der Erfindung gespeichert sind. Bevorzugt ist dies ein Datenträger, wie etwa eine CD, eine DVD oder ein Flashspeichermodul. Dies kann insbesondere vorteilhaft sein, wenn das Computerprogramm als solches handelbar oder durch einen Benutzer zur Programmierung eines Systems verwendet werden soll. Alternativ oder zusätzlich kann die Erfindung auch in Form einer das Computerprogramm enthaltenden Datei auf einer Datenverarbeitungseinheit, insbesondere auf einem Server, vorliegen. Solche Dateien können über eine Datenverbindung in ein System gemäß einem zweiten Aspekt der Erfindung ladbar sein (z.B. per Download über das Internet oder eine dedizierte Datenverbindung).

Ein Steuerungsprogramm im Sinne der Erfindung ist vorzugsweise eine Software oder zumindest ein Teil einer Software zur Automatisierung zumindest eines Teils einer technischen Anlage. Das Steuerungsprogramm kann einen Softwarecode enthalten, der eine Steuerung und/oder Regelung zumindest eines Teils der technischen Anlage erlaubt. Das Steuerungsprogramm weist vorzugsweise mehrere Programmkomponenten auf, die zum Beispiel unterschiedliche Datenverarbeitungsfunktionen, zum Beispiel unterschiedliche Steuerungs- und/oder Regelungsaufgaben, Kommunikationsanforderungen und/oder dergleichen, erfüllen können.

Eine Programmkomponente im Sinne der Erfindung ist vorzugsweise ein Teil einer Software, insbesondere ein Softwaremodul. Eine Programmkomponente kann einen Teil des Softwarecodes der Software enthalten, der eine vorgegebene Datenverarbeitungsfunktion erfüllt. Eine Programmkomponente kann sich innerhalb eines Steuerungsprogramms beispielsweise auf einzelne Sensoren oder Aktuatoren einer technischen Anlage, zum Beispiel Ventile, Motoren, Regler, Messfühler und/oder dergleichen, beziehen und die von diesen bereitgestellten Daten verarbeiten und/oder Steuerungs- bzw. Regelungssignale erzeugen und an die Sensoren oder Aktuatoren ausgeben.

Eine Klasse von Programmkomponenten, auch als Programmkomponentenklasse bezeichnet, im Sinne der Erfindung entspricht vorzugsweise einer Menge von Objekten mit zumindest teilweise gleichen Merkmalen. Beispielsweise können Programmkomponenten in einer Programmkomponentenklasse zusammengefasst werden, die eine Gemeinsamkeit aufweisen und/oder die ähnliche Datenverarbeitungsfunktionen erfüllen. Eine Klasse von Programmkomponenten kann beispielsweise durch Softwarecode zum Aufrufen von Funktionsbausteinen bzw. definierten Funktionen, zum Zuweisen von Variablen, zum Reservieren von Speicherbereichen, zur Anwendung von Operatoren und/oder dergleichen gebildet werden. Solcher Softwarecode kann insbesondere Sprachelemente einer Programmiersprache, welche solche Funktionen realisieren, aufweisen.

Eine Strukturierung von Programmkomponenten bezüglich ihrer Klasse im Sinne der Erfindung ist vorzugsweise eine vorgegebene oder vorgebbare grafische und/oder datentechnische Organisation oder Aufteilung der Programmkomponenten. Die Strukturierung von Programmkomponenten bezüglich ihrer Klasse kann beispielsweise die grafische und/oder datentechnische Anordnung der Programmkomponenten einer Klasse, insbesondere zu Programmkomponenten einer anderen Klasse, betreffen.

Ein Aspekt der Erfindung basiert auf dem Ansatz, ein zu validierendes Steuerungsprogramm modular zu betrachten und zumindest einen Teil seiner Programmkomponenten insbesondere in verschiedene Klassen aufzuteilen, und die Programmkomponenten vorzugsweise zumindest teilweise mit entsprechenden Programmkomponenten aus einer Programmbibliothek paarweise zu vergleichen. Die Programmbibliothek enthält dabei in bevorzugter Weise vorgefertigte bzw. vorgegebene Programmkomponenten bzw. Softwaremodule, die zum Beispiel vordefinierte, insbesondere genormte bzw. standardisierte, Datenverarbeitungsfunktionen erfüllen können. Ein Ergebnis des Vergleichs wird daraufhin ausgegeben, zum Beispiel graphisch auf einer Anzeigeeinrichtung oder auf einem Ausdruck, oder in einer Datei. Dabei ist oder wird das Ergebnis bezüglich der Klassen der Programmkomponenten, insbesondere des Steuerungsprogramms, strukturiert. Dadurch können spezifische Änderungen an Programmkomponenten aus der Programmbibliothek, die im Steuerungsprogramm umgesetzt sind, leicht identifiziert bzw. nachgewiesen und/oder anschaulich dokumentiert werden. Eine solche Identifikation bzw. ein solcher Nachweis oder eine solche Dokumentation ist dabei jederzeit, insbesondere zum Zeitpunkt einer Abnahme der technischen Anlage durch eine Zulassungsbehörde, ohne großen Aufwand möglich.

Durch den paarweisen Vergleich der Programmkomponenten und die Ausgabe des in Bezug auf die Klassen strukturierten Ergebnisses des Vergleichs kann auch ein dedizierter Nachweis erbracht werden, dass Programmkomponenten des Steuerungsprogramms mit Programmkomponenten der Programmbibliothek übereinstimmen, d. h. insbesondere Kopien der Programmkomponenten aus der Programmbibliothek sind. Ebenso können zum Beispiel an den Programmkomponenten des Steuerungsprogramms vorgenommene Parametrierungen sowie Programmerweiterungen differenziert bzw. detailliert dokumentiert werden.

Dabei können die unterschiedlichen Klassen der Programmkomponenten auch beim paarweisen Vergleichen der Programmkomponenten des Steuerungsprogramms mit den Programmkomponenten aus der Programmbibliothek (direkt mit) berücksichtigt werden. Zum Beispiel können, falls erforderlich, lediglich Programmkomponenten einer Klasse miteinander verglichen werden. Dies kann Rechen- und/oder Speicherkapazität sparen.

Insbesondere beim grafischen Ausgeben des Ergebnisses können Softwarekomponenten grafisch dargestellt bzw. abgebildet werden. Eine grafische Darstellung bzw. Abbildung von Softwarekomponenten ist bzw. wird hierbei vorzugsweise von einer schematischen Darstellung bzw. Abbildung, insbesondere durch ein die betreffende Softwarekomponente repräsentierendes Symbol, gebildet. Dies erlaubt eine besonders übersichtliche und/oder leicht zugängliche Ausgabe des Ergebnisses des Vergleichs.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform ist oder wird im ausgegebenen Ergebnis des Vergleichs zumindest ein Teil von Programmkomponenten des Steuerungsprogramms einem Teil von Programmkomponenten aus der Programmbibliothek, insbesondere graphisch, gegenübergestellt. Beispielsweise können Programmkomponenten des Steuerungsprogramms, insbesondere solche, die auf einer Kopie einer Programmkomponente aus der Programmbibliothek basieren, über ein grafisches Element mit der entsprechenden Programmkomponente aus der Programmbibliothek verbunden sein. Alternativ oder zusätzlich können diese Programmkomponenten des Steuerungsprogramms grafisch unmittelbar neben den korrespondierenden Programmkomponenten aus der Programmbibliothek angeordnet sein. Für einen Benutzer, der das Steuerungsprogramm validiert, ist es so besonders einfach zu erkennen, an welcher Stelle Unterschiede zwischen den Programmkomponenten des Steuerungsprogramms und den Programmkomponenten aus der Programmbibliothek bestehen.

In einer weiteren bevorzugten Ausführungsform wird das Ergebnis graphisch als Differenzbaum, in dem die Programmkomponenten des Steuerungsprogramms gegliedert sind, ausgegeben, insbesondere dargestellt. Ein Differenzbaum ist hierbei vorzugsweise eine baumartige Darstellung der Struktur des Steuerungsprogramms, in der die Ergebnisse des Vergleichs, zum Beispiel Unterschiede zwischen Programmkomponenten des Steuerungsprogramms und aus der Programmbibliothek, mit dargestellt sind bzw. werden. Der Differenzbaum weist vorzugsweise sog. Knoten auf, an denen die Programmkomponenten des Steuerungsprogramms angeordnet sind und die Zweige bzw. Verzweigungen in der baumartigen Darstellung bilden. Die Knoten weisen neben den Programmkomponenten des Steuerungsprogramms dabei in bevorzugter Weise auch die jeweils korrespondierenden, zum Beispiel als Vorlage dienenden Programmkomponenten aus der Programmbibliothek auf. Mit anderen Worten bildet ein Paar aus einer Programmkomponente des Steuerungsprogramms und einer Programmkomponente aus der Programmbibliothek jeweils einen Knoten. Programmkomponenten des Steuerungsprogramms und Programmkomponenten aus der Programmbibliothek können einander an den Knoten des Differenzbaums gegenübergestellt sein oder werden. Die Ausgabe des Ergebnisses des Vergleichs als Differenzbaum ermöglicht eine besonders übersichtliche Darstellung des Ergebnisses und damit der Unterschiede zwischen den Programmkomponenten des Steuerungsprogramms und den Programmkomponenten aus der Programmbibliothek. Zudem ermöglicht die Ausgabe des Ergebnisses als Differenzbaum auch eine besonders komfortable Navigation eines Benutzers durch das Steuerungsprogramm bzw. seine Komponenten.

In einer weiteren bevorzugten Ausführungsform wird in einem vorgegebenen Betriebsmodus das Ergebnis nur für einen Teil der Klassen von Programmkomponenten ausgegeben. Beispielsweise kann das Ergebnis nur für Programmkomponenten ausgegeben werden, die Sprachelemente enthalten, welche z. B. einen Nachweis der Identität erfordern, d. h. für die nachzuweisen ist, dass sie nicht manipuliert wurden. Alternativ oder zusätzlich kann das Ergebnis in einem anderen Betriebsmodus nur für Programmkomponenten ausgegeben werden, die eine Programmschnittstelle bilden, d. h. deren Elemente explizit dafür vorgesehen sind, in ihren Attributen - wie z. B. Parameterwerten - angepasst und damit verändert zu werden, und/oder die eine Erweiterung der Programmbibliothek bilden, d. h. die nicht einer Programmkomponente aus der Programmbibliothek zuordenbar sind. Insbesondere können Programmkomponenten einer oder mehrerer Klassen aus dem Ergebnis herausgefiltert bzw. nicht im Ergebnis mit ausgegeben werden. Durch die Ausgabe des Ergebnisses für nur einen Teil der Klassen kann die Übersichtlichkeit des Ergebnisses erhöht bzw. die Validierung des Steuerungsprogramms erleichtert werden. Darüber hinaus kann, zum Beispiel durch die reduzierte Anzahl der anzuzeigenden Elemente, die Navigation durch das Steuerungsprogramm vereinfacht werden.

In einer weiteren bevorzugten Ausführungsform sind oder werden die Programmkomponenten des Steuerungsprogramms wenigstens einer Klasse jeweils mit einer Programmkomponente aus der Programmbibliothek derselben Klasse verknüpft. Vorzugsweise werden die Programmkomponenten des Steuerungsprogramms dieser Klasse dabei jeweils mit derjenigen Programmkomponente verglichen, mit der sie verknüpft sind oder werden. Dabei können die Programmkomponenten des Steuerungsprogramms einen Hinweis bzw. eine Referenz auf die korrespondierende Steuerungskomponente aus der Programmbibliothek aufweisen. Dadurch kann eine eindeutige Zuordnung von Programmkomponenten des Steuerungsprogramms zu Programmkomponenten aus der Programmbibliothek bestehen oder erzeugt werden. Der Vergleich einzelner Programmkomponenten kann so besonders schnell und zuverlässig durchgeführt werden.

Ein Hinweis bzw. eine Referenz kann beispielsweise beim Kopieren einer Programmkomponente aus der Programmbibliothek beim Er- bzw. Zusammenstellen des Steuerungsprogramms, d. h. bei der Projektierung der Regelung der technischen Anlage, erzeugt werden. Der Hinweis bzw. die Referenz verweist dabei vorzugsweise auf die jeweilige Kopiervorlage in der Programmbibliothek. Mit anderen Worten enthalten die Programmkomponenten des Steuerungsprogramms vorzugsweise Information über ihre Kopierquelle bzw. Vorlage in der Programmbibliothek. Ein Vergleich der Programmkomponenten auf Grundlage einer solchen Verknüpfung erleichtert das Auffinden von Abweichungen bzw. Übereinstimmungen der Programmkomponenten des Steuerungsprogramms mit den Programmkomponenten aus der Programmbibliothek.

In einer weiteren bevorzugten Ausführungsform werden Details zum Ergebnis des Vergleichs einer durch eine Benutzereingabe vorgegebenen Programmkomponente des Steuerungsprogramms mit einer Programmkomponente aus der Programmbibliothek ausgegeben. Zum Beispiel können die Attribute wie Parameterwerte, Verschaltungen und/oder dergleichen der durch die Benutzereingabe vorgegebene Programmkomponente und der entsprechenden Attribute der korrespondierenden Programmkomponente aus der Programmbibliothek ausgegeben, insbesondere einander gegenüberliegend graphisch dargestellt bzw. angezeigt, werden. Dadurch kann ein Benutzer, der die Validierung des Steuerungsprogramms durchführt, mögliche Unterschiede zwischen den Programmkomponenten des Steuerungsprogramms und aus der Programmbibliothek bis ins Detail nachvollziehen.

Eine Benutzereingabe kann dabei beispielsweise die Auswahl einer Programmkomponente, insbesondere eines Knotens des Differenzbaums, beispielsweise durch einen Mausklick oder eine ähnliche Benutzerhandlung, umfassen.

In einer weiteren bevorzugten Ausführungsform werden Unterschiede zwischen wenigstens einer Programmkomponente des Steuerungsprogramms und wenigstens einer Programmkomponente aus der Programmbibliothek in Form einer Attributsliste dargestellt. Eine Attributsliste ist hierbei vorzugsweise eine zum Beispiel tabellarische Darstellung bzw. Auflistung der Attribute einer Programmkomponente des Steuerungsprogramms, wie zum Beispiel Parameterwerte, Verschaltungen und/oder dergleichen und der entsprechenden Attribute einer korrespondierenden Programmkomponente aus der Programmbibliothek. Alternativ oder zusätzlich können in der Attributsliste aber auch nur die Differenzen zwischen den Attributen der Komponenten enthalten sein. Weicht die Programmkomponente des Steuerungsprogramms von der Programmkomponente aus der Programmbibliothek ab, können die dann in der Attributliste aufgeführten Unterschiede auch als Maß für die Abweichung zwischen den Programmkomponenten aufgefasst werden.

In einer weiteren bevorzugten Ausführungsform wird das Vorhandensein wenigstens eines Unterschieds zwischen einer Programmkomponente des Steuerungsprogramms und einer Programmkomponente aus der Programmbibliothek graphisch angezeigt. Beispielsweise können die Programmkomponenten bei Vorliegen von Unterschieden im ausgegebenen Ergebnis grafisch markiert bzw. hervorgehoben werden, etwa durch eine farbliche Markierung, eine entsprechende Form und/oder ein entsprechendes Symbol. Dadurch kann ein Benutzer, der das Steuerungsprogramm validiert, auf den ersten Blick erkennen, ob die Programmkomponenten des Steuerungsprogramms mit den, gegebenenfalls standardisierten, Programmkomponenten aus der Programmbibliothek übereinstimmen.

Dabei können insbesondere Programmkomponenten des Steuerungsprogramms wie etwa Erweiterungen z. B. in Form zusätzlichen Softwarecodes, die keine korrespondierenden Programmkomponenten aus der Programmbibliothek aufweisen, entsprechend grafisch markiert, d. h. beispielsweise farblich oder durch Form hervorgehoben, werden. Insbesondere können solche Programmkomponenten als eigenständige Knoten des Differenzbaums ohne ein Vergleichsobjekt dargestellt werden. Dadurch kann das Vergleichsergebnis bezüglich solcher Programmkomponenten, insbesondere der aus dieser Programmkomponenten gebildeten Klasse, nahtlos in das auszugebende Ergebnis integriert und das Ergebnis z. B. in einer geschlossenen Form grafisch dargestellt werden.

In einer weiteren bevorzugten Ausführungsform basiert zumindest ein Teil der Programmkomponenten des Steuerungsprogramms auf einer Kopie von Programmkomponenten aus der Programmbibliothek. Die Programmkomponenten aus der Programmbibliothek dienen dabei vorzugsweise als Kopiervorlage und können zum Beispiel genormten bzw. standardisierten Programmkomponenten entsprechen. Gegebenenfalls kann ein Teil der kopierten Programmkomponenten bei der Projektierung der technischen Anlage vorgenommene Parametrierungen bzw. Beschaltungen aufweisen. Auf Programmkomponenten aus der Programmbibliothek basierende Programmkomponenten des Steuerungsprogramms können die Dokumentation von Unterschieden zu Normen bzw. Standards erleichtern und erlauben damit eine Vereinfachung der Validierung des Steuerungsprogramms.

In einer weiteren bevorzugten Ausführungsform ist wenigstens eine erste Klasse von Programmkomponenten durch Sprachelemente gebildet. Sprachelemente sind hierbei vorzugsweise Elemente einer Programmiersprache, in der zumindest ein Teil der Programmkomponenten formuliert ist. Die Programmkomponenten der ersten Klasse enthalten in bevorzugter Weise einen Softwarecode zum Aufrufen von Funktionsbausteinen bzw. definierten Funktionen, zum Zuweisen von Variablen, zum Reservieren von Speicherbereichen, zur Anwendung von Operatoren und/oder dergleichen.

Alternativ oder zusätzlich bildet wenigstens eine zweite Klasse von Programmkomponenten Programmschnittstellen. Die zweite Klasse kann beispielsweise auf Programmkomponenten aus der Programmbibliothek basierende Programmkomponenten enthalten, an denen im Rahmen der Projektierung der technischen Anlage Parametrierungen bzw. Beschaltungen zur Integration des Steuerungsprogramms in das Leitsystem der Anlage vorgenommen worden sind.

Alternativ oder zusätzlich bildet wenigstens eine dritte Klasse Erweiterungen der Programmbibliothek. Mit anderen Worten enthält die dritte Klasse Programmkomponenten des Steuerungsprogramms, die keine Entsprechung in der Programmbibliothek aufweisen. Beispielsweise kann diese Klasse bei der Projektierung der technischen Anlage vorgenommene Programmerweiterungen, zum Beispiel eine Verriegelungslogik, aufweisen.

Eine derartige Klassifizierung der Programmkomponenten des Steuerungsprogramms erlaubt eine besonders übersichtliche Strukturierung bzw. Darstellung des Steuerungsprogramms bzw. des Ergebnisses des Vergleichs der Programmkomponenten des Steuerungsprogramms mit den Programmkomponenten aus der Programmbibliothek.

Ein System zum Validieren eines Steuerungsprogramms, insbesondere für eine technische Anlage, gemäß einem zweiten Aspekt der Erfindung weist ein Vergleichsmodul auf, welches dazu eingerichtet ist, Programmkomponenten des Steuerungsprogramms paarweise mit Programmkomponenten aus einer Programmbibliothek zu vergleichen. Erfindungsgemäß weist das System auch ein Ausgabemodul auf, welches dazu eingerichtet ist, ein Ergebnis des Vergleichs, insbesondere graphisch, auszugeben, wobei das Ergebnis bezüglich verschiedener Klassen von Programmkomponenten strukturiert ist.

Das System kann hard- und/oder softwaretechnisch ausgebildet sein. Insbesondere kann das System eine, vorzugsweise mit einem Speicher- und/oder Bussystem daten- bzw. signalverbundene, insbesondere digitale, Verarbeitungseinheit, insbesondere Mikroprozessoreinheit (CPU), oder ein Modul einer solchen aufweisen. Alternativ oder zusätzlich kann das System auch ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es das Verfahren gemäß dem ersten Aspekt der Erfindung verkörpert bzw. auszuführen imstande ist, sodass die CPU die Schritte des Verfahrens ausführen kann.

Vorzugsweise ist auch die Programmbibliothek Teil des Systems. Die Programmbibliothek enthält dabei in bevorzugter Weise normierte bzw. standardisierte Programmkomponenten, mit denen z. B. die Zuverlässigkeit einer Anlagenregelung gewährleistet werden kann. Die Programmbibliothek kann durch eine Speichervorrichtung realisiert sein.

Das Ausgabemodul kann eine Anzeigeeinrichtung und/oder eine Druckeinrichtung, alternativ oder zusätzlich auch eine Speichereinrichtung und/oder eine Ausgabeschnittstelle, aufweisen. Das Ausgabemodul kann dazu eingerichtet sein, das Ergebnis des Vergleichs auf der Anzeigeeinrichtung grafisch darzustellen, über die Druckeinrichtung auszudrucken, in der Speichereinrichtung zu speichern und/oder über die Ausgabeschnittstelle bereitzustellen, z. B. in einem Netzwerk.

Die bisher gegebene Beschreibung bevorzugter Ausführungsformen der Erfindung enthält zahlreiche Merkmale, die in den einzelnen abhängigen Ansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem Verfahren gemäß dem ersten Aspekt der Erfindung und dem System gemäß dem zweiten Aspekt der Erfindung kombinierbar.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. In den Figuren werden durchgängig dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale der Ausführungsbeispiele auch explizit isoliert betrachtet und mit einem beliebigen der Ansprüche kombiniert werden.

Es zeigen, zumindest teilweise schematisch:
- FIG 1: ein Beispiel eines Systems zum Validieren eines Steuerungsprogramms;
- FIG 2: ein Beispiel einer Struktur eines Steuerungsprogramms;
- FIG 3: ein Beispiel eines graphisch ausgegebenen Ergebnisses eines Vergleichs von Programmkomponenten eines Steuerungsprogramms mit Programmkomponenten aus einer Programmbibliothek;
- FIG 4: ein Beispiel des ausgegebenen Ergebnisses aus FIG 3 in einem ersten Betriebsmodus;
- FIG 5: ein Beispiel eines ausgegebenen Ergebnisses aus FIG 3 in einem zweiten Betriebsmodus;
- FIG 6: ein Beispiel eines ausgegebenen Ergebnisses aus FIG 3 in einem dritten Betriebsmodus; und
- FIG 7: ein Beispiel eines Verfahrens zum Validieren eines Steuerungsprogramms.

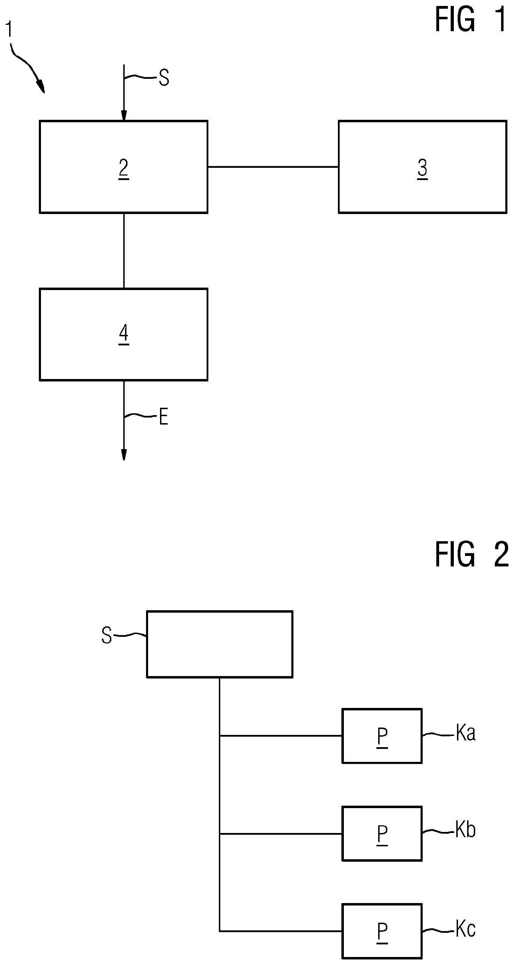

**FIG 1** zeigt ein Beispiel eines Systems 1 zum Validieren eines Steuerungsprogramms S, insbesondere für eine technische Anlage, mit einem Vergleichsmodul 2, welches dazu eingerichtet ist, Programmkomponenten des Steuerungsprogramms S paarweise mit Programmkomponenten aus einer Programmbibliothek 3 zu vergleichen, und einem Ausgabemodul 4, welches dazu eingerichtet ist, ein Ergebnis E des Vergleichs auszugeben, wobei das Ergebnis E bezüglich verschiedener Klassen von Programmkomponenten strukturiert ist. Dabei kann das System 1 auch die Programmbibliothek 3 oder alternativ eine Schnittstelle (nicht gezeigt) aufweisen, mit der das Vergleichsmodul 2 auf die Programmbibliothek 3 zugreifen kann. Zudem verfügt das System 1 vorzugsweise über eine Schnittstelle, über welche das Steuerungsprogramm S bereitstellbar ist.

Die Programmbibliothek 3 weist vorzugsweise eine Speichervorrichtung auf, in der zum Beispiel genormte bzw. standardisierte Programmkomponenten von Steuerungsprogrammen gespeichert oder speicherbar sind. Die Programmbibliothek 3 ist dabei in bevorzugter Weise als Datenbank ausgeführt, in der die Programmkomponenten organisiert sind. Jede der Programmkomponenten kann beispielsweise einen Datensatz bilden oder zumindest Teil eines solchen sein, der durch eine korrespondierende Programmkomponente aus dem zu validierenden Steuerungsprogramm S referenzierbar ist.

Das Ausgabemodul 4 weist vorzugsweise eine Ausgabevorrichtung, zum Beispiel eine Anzeigeeinrichtung und/oder eine Druckeinrichtung auf, mit der das Ergebnis E des Vergleichs insbesondere graphisch ausgegeben, d. h. zum Beispiel angezeigt und/oder gedruckt, werden kann. Alternativ oder zusätzlich kann die Ausgabevorrichtung auch als Ausgabeschnittstelle ausgebildet sein oder eine solche umfassen, über die das Ausgabemodul 4 das Ergebnis E in einem Speicher und/oder auf einem Datenträger speichern oder innerhalb eines Netzwerks bereitstellen kann.

**FIG 2** zeigt ein Beispiel einer Struktur eines Steuerungsprogramms S für eine technische Anlage. Das Steuerungsprogramm S setzt sich aus mehreren Programmkomponenten P zusammen, die jeweils unterschiedliche Datenverarbeitungsfunktionen erfüllen können wie zum Beispiel unterschiedliche Steuerungs- und/oder Regelungsaufgaben, Kommunikationsanforderungen und/oder dergleichen. Die Programmkomponenten P gehören dabei vorzugsweise jeweils einer Klasse Ka, Kb, Kc von Programmkomponenten P an bzw. sind in solchen Klassen Ka, Kb, Kc organisiert. Mit anderen Worten ist das Steuerungsprogramm S in verschiedene Klassen Ka, Kb, Kc von Programmkomponenten P aufgeteilt.

Eine erste Klasse Ka kann beispielsweise Programmkomponenten P enthalten bzw. aus solchen Programmkomponenten P zusammengesetzt sein, die Sprachelemente einer Programmiersprache, in der zumindest ein Teil der Programmkomponenten P formuliert ist, enthalten. Diese Sprachelemente bzw. Programmkomponenten P der ersten Klasse Ka realisieren vorzugsweise Regelungs- und/oder Steuerungsaufgaben des Steuerungsprogramms S. Zu diesem Zweck können die Programmkomponenten P der ersten Klasse Ka zum Beispiel definierte Funktionen oder Funktionsbausteine aufrufen, Operatoren anwenden, Speicherbereiche zuweisen oder verschieben und/oder dergleichen.

Eine zweite Klasse Kb kann dagegen Elemente einer Schnittstellendeklaration des Steuerungsprogramms S enthalten bzw. aus solchen Programmkomponenten P zusammengesetzt sein. Die Programmkomponenten P der zweiten Klasse Kb können beispielsweise Parametrisierungen oder Beschaltungen am Steuerungsprogramm S abbilden, welche die Kommunikation des Steuerungsprogramms S mit Anlagenkomponenten der technischen Anlage, d. h. zum Beispiel die Aufnahme von Messwerten bzw. die Ausgabe von (Steuerungs-) Signalen, ermöglicht.

Eine dritte Klasse Kc enthält vorzugsweise solche Programmkomponenten P, die Erweiterungen des Steuerungsprogramms S gegenüber in einer Programmbibliothek gespeicherten vordefinierten Programmkomponenten darstellen. Solche erweiternden Programmkomponenten P können beispielsweise von einem Benutzer beim Erzeugen des Steuerungsprogramms S hinzugefügt worden sein, zum Beispiel um ein sehr spezielles Regelungsverhalten zu realisieren oder um das Steuerungsprogramm S an eine sehr spezielle Anlagenstruktur anzupassen.

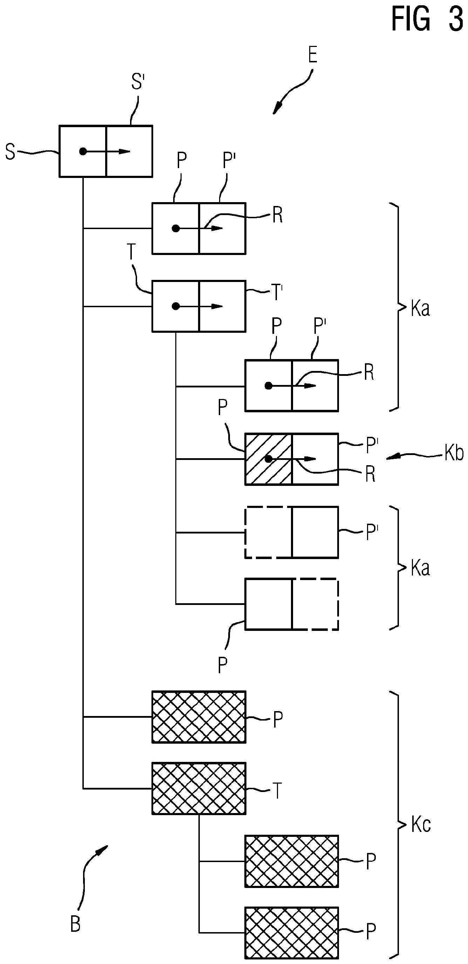

**FIG 3** zeigt ein Beispiel eines graphisch ausgegebenen Ergebnisses E eines Vergleichs von Programmkomponenten P eines Steuerungsprogramms S mit Programmkomponenten P' aus einer Programmbibliothek. Die Programmkomponenten P, P' werden im Ergebnis E dabei durch Symbole, im vorliegenden Fall Rechtecke, repräsentiert. Zumindest ein Teil des Steuerungsprogramms S kann dabei auf einem Steuerungsprogramm S' aus der Programmbibliothek, das eine Auswahl an Programmkomponenten P' aus der Programmbibliothek enthält, basieren.

Das Ergebnis E ist dabei in Bezug auf drei verschiedene Klassen Ka, Kb, Kc von Programmkomponenten P, P' strukturiert, die in FIG 3 zur besseren Übersichtlichkeit durch die Schraffur der Programmkomponenten P, P' angedeutet sind. Programmkomponenten P, P' einer ersten Klasse Ka, z. B. Sprachelemente einer Programmiersprache, weisen keine Schraffur auf, während Programmkomponenten P, P' einer zweiten Klasse Kb, z. B. Parametrierungen oder Beschaltungen, eine einfache Schraffur und Programmkomponenten P einer dritten Klasse Kc, z. B. Erweiterungen gegenüber der Programmbibliothek, eine Kreuzschraffur aufweisen.

Im Ergebnis E sind Programmkomponenten P des Steuerungsprogramms S Programmkomponenten P' aus der Programmbibliothek graphisch gegenübergestellt, zumindest diejenigen Programmkomponenten P des Steuerungsprogramms S, für die jeweils eine entsprechende Programmkomponente P' aus der Programmbibliothek existiert. Dies gilt insbesondere für Programmkomponenten P der ersten und zweiten Klasse Ka, Kb, die auf einer Kopie der entsprechenden Programmkomponente P' aus der Programmbibliothek basieren.

Unterscheidet sich eine Programmkomponente P des Steuerungsprogramms S von der entsprechenden Programmkomponenten P' aus der Programmbibliothek, kann im Ergebnis E grafisch darauf hingewiesen werden, zum Beispiel indem die entsprechenden Programmkomponenten P, P' farblich markiert und/oder mithilfe anderer Symbole/Symbolform dargestellt werden.

Ist eine Programmkomponente P' der ersten oder zweiten Klasse Ka, Kb zwar in der Programmbibliothek vorhanden, jedoch nicht Teil des Steuerungsprogramms S, wird das Fehlen der Programmkomponente P im vorliegenden Beispiel durch ein gestricheltes Symbol, insbesondere Rechteck, angezeigt.

Ist eine Programmkomponente P der ersten oder zweiten Klasse Ka, Kb zwar im Steuerungsprogramm S vorhanden, jedoch nicht Teil der Programmbibliothek, wird das Fehlen der Programmkomponente P' im vorliegenden Beispiel ebenfalls durch ein gestricheltes Symbol, insbesondere Rechteck, angezeigt.

Die Programmkomponenten P der ersten und zweiten Klasse Ka, Kb, die auf einer Kopie einer Programmkomponente P' aus der Programmbibliothek basieren, sind mit dieser jeweils verknüpft. Die Programmkomponenten P des Steuerungsprogramms S weisen zu diesem Zweck im vorliegenden Beispiel eine Referenz R auf, die auf die entsprechende Programmkomponente P' aus der Programmbibliothek verweist. Die Referenzen R bzw. die daraus resultierenden Verknüpfungen sind im Ergebnis E in FIG 3 durch Pfeile dargestellt.

Die Programmkomponenten P der dritten Klasse Kc, welche nicht auf einer Kopie einer Programmkomponenten P' aus der Programmbibliothek basieren, sondern eine Erweiterung gegenüber der Programmbibliothek darstellen, können dementsprechend keine Referenz R aufweisen und sind auch keiner Programmkomponenten P' aus der Programmbibliothek gegenübergestellt.

Um einen Benutzer, der eine Validierung des Steuerungsprogramms S vornimmt, eine komfortable und übersichtliche Darstellung des Ergebnisses E zu ermöglichen, wird das Ergebnis E wie in FIG 3 gezeigt graphisch in Form eines Differenzbaums B ausgegeben. Im Differenzbaum B ist die Struktur des Steuerungsprogramms S (siehe auch FIG 2) sowohl in Bezug auf die Klassen Ka, Kb, Kc als auch auf die Hierarchie des Steuerungsprogramms S leicht zu erkennen. Insbesondere können im Differenzbaum B Programmbausteine bzw. -blöcke T des Steuerungsprogramms S, in welchen mehrere, gegebenenfalls zusammenwirkende Programmkomponenten P zusammengefasst sind und die gegebenenfalls mit Programmbausteinen bzw. -blöcken T' aus der Programmbibliothek korrespondieren, dargestellt werden.

Wird das Ergebnis E zum Beispiel mithilfe einer Anzeigeeinrichtung dargestellt, kann auch vorgesehen sein, dass der Benutzer durch eine entsprechende Benutzereingabe, zum Beispiel durch einen Klick auf einen entsprechenden Zweig des Differenzbaums B, die diesem Zweig untergeordneten Programmkomponenten P des Steuerungsprogramms S sowie die entsprechenden Programmkomponenten P' aus der Programmbibliothek aus- oder einblenden kann. Die Übersichtlichkeit kann dadurch weiter erhöht werden.

Des Weiteren kann vorgesehen sein, dass bei einer entsprechenden Benutzereingabe weitere Details zu den Unterschieden eines Paars aus einer Programmkomponente P des Steuerungsprogramms S und einer Programmkomponente P' aus der Programmbibliothek anzeigt werden. Beispielsweise kann eine Attributsliste für ein Paar angezeigt werden, wenn der Benutzer im Differenzbaum B darauf klickt.

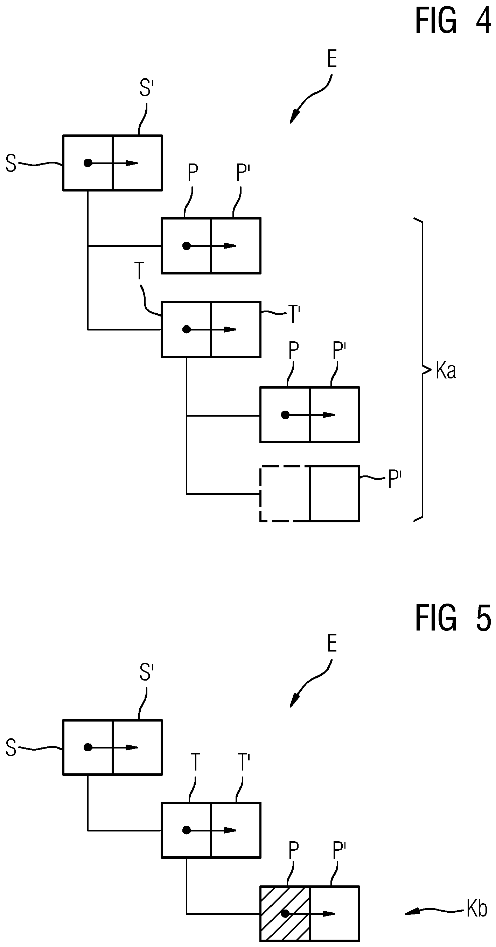

**FIG 4** zeigt ein Beispiel des ausgegebenen Ergebnisses E aus FIG 3 in einem ersten Betriebsmodus. Darin werden lediglich Programmkomponenten P, P' aus der ersten Klasse Ka grafisch dargestellt. Dabei können Programmkomponenten des Steuerungsprogramms S, die mit anderen Programmkomponenten P zu einem Programmbaustein T zusammengefasst sind, jedoch zu einer anderen Klasse gehören, herausgefiltert werden.

Wie in FIG 3 werden hierbei Programmkomponenten P des Steuerungsprogramms S den Programmkomponenten P' aus der Programmbibliothek gegenübergestellt. Das im ersten Betriebsmodus ausgegebene Ergebnis E kann somit ein Ausschnitt aus dem in FIG 3 gezeigten Differenzbaum sein.

Im gezeigten Beispiel werden im ersten Betriebsmodus auch Programmkomponenten P' aus der Programmbibliothek dargestellt, die der ersten Klasse Ka zugeordnet sind, für es aber keine Entsprechung im Steuerungsprogramm S gibt. Dies gilt insbesondere für Programmkomponenten P', die Teil eines Programmbausteins T' eines Steuerungsprogramms S' aus der Programmbibliothek sind, der als Programmbaustein T zumindest teilweise auch im Steuerungsprogramm S enthalten ist. Das Fehlen einer entsprechenden Programmkomponente P im Steuerungsprogramm S bzw. seinem Programmbaustein T wird dabei wie in FIG 3 durch das gestrichelte Rechteck angezeigt.

**FIG 5** zeigt ein Beispiel des ausgegebenen Ergebnisses E aus FIG 3 in einem zweiten Betriebsmodus. Darin werden lediglich Programmkomponenten P, P' aus der zweiten Klasse Kb grafisch dargestellt. Dabei können Programmkomponenten des Steuerungsprogramms S, die mit anderen Programmkomponenten P zu einem Programmbaustein T zusammengefasst sind, jedoch zu einer anderen Klasse gehören, herausgefiltert werden.

Wie in FIG 3 werden hierbei Programmkomponenten P des Steuerungsprogramms S den Programmkomponenten P' aus der Programmbibliothek gegenübergestellt. Analog zum im in FIG 4 gezeigten Beispiel wird das Ergebnis E auch im zweiten Betriebsmodus als Ausschnitt aus dem in FIG 3 gezeigten Differenzbaum ausgegeben.

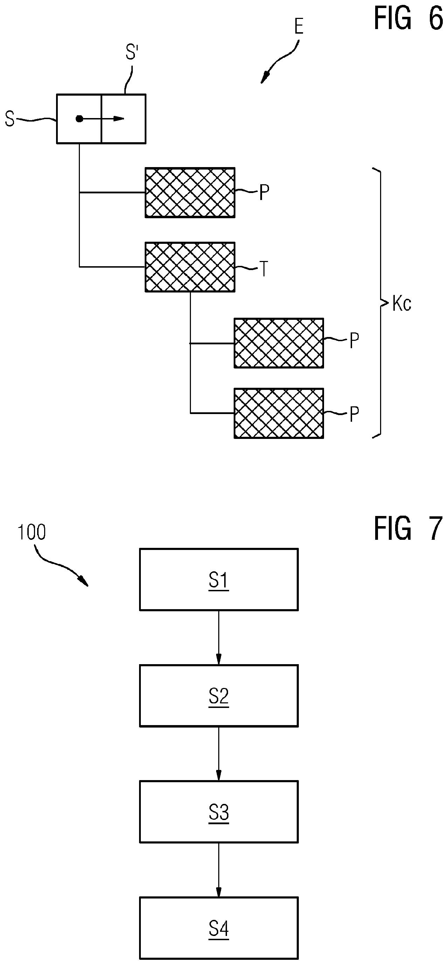

**FIG 6** zeigt ein Beispiel des ausgegebenen Ergebnisses E aus FIG 3 in einem dritten Betriebsmodus. Darin werden lediglich Programmkomponenten P aus der dritten Klasse Kc grafisch dargestellt. Da die dritte Klasse Kc nur Programmkomponenten P enthält, die keine Entsprechung in der Programmbibliothek aufweisen, sind diesen im dritten Betriebsmodus keine Programmkomponenten aus der Programmbibliothek gegenübergestellt. Analog zu den in FIG 4 und FIG 5 gezeigten Beispielen wird das Ergebnis E auch im dritten Betriebsmodus als Ausschnitt aus dem in FIG 3 gezeigten Differenzbaum ausgegeben.

**FIG 7** zeigt ein Beispiel eines Verfahrens 100 zum Validieren eines Steuerungsprogramms. In einem Verfahrensschritt S1 werden dabei Programmkomponenten des Steuerungsprogramms paarweise mit Programmkomponenten aus einer Programmbibliothek verglichen.

Dabei kann zumindest ein Teil der Programmkomponenten des Steuerungsprogramms auf Programmkomponenten aus der Programmbibliothek basieren, zum Beispiel als Kopie erzeugt worden sein. Solche Kopien weisen vorzugsweise jeweils eine Referenz auf die ursprüngliche, als Kopiervorlage dienende Programmkomponente aus der Programmbibliothek auf. Dem Vergleich der Programmkomponenten des Steuerungsprogramms mit den Programmkomponenten aus der Programmbibliothek können dabei insbesondere diese Referenzen zugrunde gelegt werden, zum Beispiel indem eine Programmkomponente mit der jeweils referenzierten Programmkomponenten aus der Programmbibliothek verglichen wird.

Das Ergebnis des Vergleichs wird in einem weiteren Verfahrensschritt S2 ausgegeben, zum Beispiel grafisch als Differenzbaum dargestellt. Das Ergebnis ist dabei bezüglich verschiedener Klassen von Programmkomponenten strukturiert. Zum Beispiel können einzelne Programmkomponenten als einer bestimmten Klasse zugehörig gekennzeichnet sein bzw. werden.

In dem Differenzbaum sind die Programmkomponenten des Steuerungsprogramms gemäß einer Struktur des Steuerungsprogramms gegliedert, zum Beispiel in Programmbausteinen oder -blöcken zusammengefasst.

Zudem ist zumindest ein Teil der Programmkomponenten des Steuerungsprogramms den Programmkomponenten aus der Programmbibliothek im Differenzbaum grafisch gegenübergestellt, zum Beispiel in Form von miteinander verbundenen Symbolen. Die Verbindung zwischen zwei Symbolen kann zum Beispiel durch einen Pfeil und/oder durch unmittelbar benachbarte Darstellung angezeigt werden. Vorzugsweise wird das Vorhandensein von Unterschieden zwischen einer Programmkomponente des Steuerungsprogramms und einer Programmkomponente aus der Programmbibliothek grafisch angezeigt, zum Beispiel durch eine vorgegebene farbliche Markierung und/oder eine vorgegebene Symbolform.

In einem weiteren Verfahrensschritt S3 kann ein Ausgabemodul, welches zur insbesondere grafischen Ausgabe des Ergebnisses eingerichtet ist, in einen Betriebsmodus versetzt werden, indem beispielsweise nur ein Teil der Programmkomponenten des Steuerungsprogramms dargestellt wird. Insbesondere können in dem Betriebsmodus nur Programmkomponenten einer Klasse angezeigt werden.

In einem weiteren Verfahrensschritt S4 können Unterschiede zwischen wenigstens einer Programmkomponente des Steuerungsprogramms und wenigstens einer Programmkomponente aus der Programmbibliothek in Form einer Attributsliste dargestellt werden. Verfahrensschritt S4 wird dabei vorzugsweise nach dem Erfassen einer entsprechenden Benutzereingabe, zum Beispiel einem Mausklick auf ein entsprechendes Paar aus einer Programmkomponente des Steuerungsprogramms und einer Programmkomponente aus der Programmbibliothek, ausgeführt. In der daraufhin zum Beispiel eingeblendeten Attributsliste können alle Eigenschaften der Programmkomponente des Steuerungsprogramms, z. B. der Datentyp einer Variable, den Eigenschaften der Programmkomponente aus der Programmbibliothek listen- bzw. tabellenartig gegenübergestellt sein, sodass Benutzer Änderungen an der Programmkomponente des Steuerungsprogramms leicht nachvollziehen bzw. bewerten kann, inwieweit die Programmkomponente von einer genormten bzw. standardisierten Programmkomponente aus der Programmbibliothek abweicht.

### Bezugszeichenliste

- 1: System
- 2: Vergleichsmodul
- 3: Programmbibliothek
- 4: Ausgabemodul

- 100: Verfahren

- S, S': Steuerungsprogramm
- P, P': Programmkomponente
- E: Ergebnis
- Ka, Kb, Kc: Klasse
- T, T': Programmbaustein
- R: Referenz
- B: Differenzbaum

- Sl-S4: Verfahrensschritt

## Patentansprüche

1. Verfahren (100) zum Validieren eines Steuerungsprogramms (S), insbesondere für eine technische Anlage, wobei Programmkomponenten (P) des Steuerungsprogramms (S) paarweise mit Programmkomponenten (P') aus einer Programmbibliothek (3) verglichen (S1) werden,
**dadurch gekennzeichnet,**
**dass** ein Ergebnis (E) des Vergleichs ausgegeben (S2) wird, wobei das Ergebnis (E) bezüglich verschiedener Klassen (Ka, Kb, Kc) von Programmkomponenten (P, P') strukturiert ist.

2. Verfahren (100) nach Anspruch 1,
**dadurch gekennzeichnet,**
**dass** im ausgegebenen Ergebnis (E) des Vergleichs zumindest ein Teil von Programmkomponenten (P) des Steuerungsprogramms (S) einem Teil von Programmkomponenten (P') aus der Programmbibliothek (3) graphisch gegenübergestellt ist.

3. Verfahren (100) nach einem der Ansprüche 1 oder 2,
**dadurch gekennzeichnet,**
**dass** das Ergebnis (E) graphisch als Differenzbaum (B), in dem die Programmkomponenten (P) des Steuerungsprogramms (S) gegliedert sind, ausgegeben wird.

4. Verfahren (100) nach einem der vorangehenden Ansprüche,
**dadurch gekennzeichnet,**
**dass** in einem vorgegebenen Betriebsmodus das Ergebnis (E) nur für einen Teil der Klassen (Ka, Kb, Kc) von Programmkomponenten (P, P') ausgegeben (S3) wird.

5. Verfahren (100) nach einem der vorangehenden Ansprüche,
**dadurch gekennzeichnet,**
**dass** die Programmkomponenten (P) des Steuerungsprogramms (S) wenigstens einer Klasse (Ka, Kb, Kc) jeweils mit einer Programmkomponente (P') aus der Programmbibliothek (3) derselben Klasse (Ka, Kb, Kc) verknüpft sind und jeweils mit dieser Programmkomponente (P') verglichen werden.

6. Verfahren (100) nach einem der vorangehenden Ansprüche,
**dadurch gekennzeichnet,**
**dass** Details zum Ergebnis (E) des Vergleichs einer durch eine Benutzereingabe vorgegebenen Programmkomponente (P) des Steuerungsprogramms (S) mit einer Programmkomponente (P') aus der Programmbibliothek (3) ausgegeben werden.

7. Verfahren (100) nach einem der vorangehenden Ansprüche,
**dadurch gekennzeichnet,**
**dass** Unterschiede zwischen wenigstens einer Programmkomponente (P) des Steuerungsprogramms (S) und wenigstens einer Programmkomponente (P') aus der Programmbibliothek (3) in Form einer Attributsliste dargestellt (S4) werden.

8. Verfahren (100) nach einem der vorangehenden Ansprüche,
**dadurch gekennzeichnet,**
**dass** das Vorhandensein wenigstens eines Unterschieds zwischen einer Programmkomponenten (P) des Steuerungsprogramms (S) und einer Programmkomponente (P') aus der Programmbibliothek (3) graphisch angezeigt wird.

9. Verfahren (100) nach einem der vorangehenden Ansprüche,
**dadurch gekennzeichnet,**
**dass** zumindest ein Teil der Programmkomponenten (P) des Steuerungsprogramms (S) auf einer Kopie von Programmkomponenten (P') aus der Programmbibliothek (3) basiert.

10. Verfahren (100) nach einem der vorangehenden Ansprüche,
**dadurch gekennzeichnet,**
**dass** wenigstens eine erste Klasse (Ka) von Programmkomponenten (P, P') durch Sprachelemente gebildet ist und/oder wenigstens eine zweite Klasse (Kb) von Programmkomponenten (P, P') Programmschnittstellen bildet und/oder wenigstens eine dritte Klasse (Kc) Erweiterungen der Programmbibliothek (3) bildet.

11. System (1) zum Validieren eines Steuerungsprogramms (S), insbesondere für eine technische Anlage, mit einem Vergleichsmodul (2), welches dazu eingerichtet ist, Programmkomponenten (P) des Steuerungsprogramms (S) paarweise mit Programmkomponenten (P') aus einer Programmbibliothek (3) zu vergleichen,
**gekennzeichnet durch**
ein Ausgabemodul (4), welches dazu eingerichtet ist, ein Ergebnis (E) des Vergleichs, insbesondere graphisch, auszugeben, wobei das Ergebnis (E) bezüglich verschiedener Klassen (Ka, Kb, Kc) von Programmkomponenten (P, P') strukturiert ist.
